# EUROPEAN PATENT SPECIFICATION

(11) **EP 1 827 093 B1**
(45) Date of publication and mention of the grant of the patent: **04.05.2011**
(21) Application number: 05820595.6
(22) Date of filing: 12.12.2005
(51) Int. Cl.: A01M 1/06, A01M 1/02

(54) **APPARATUS AND METHOD FOR INSECT CAPTURE**
VORRICHTUNG UND VERFAHREN ZUM FANGEN VON INSEKTEN
PROCEDE ET DISPOSITIF POUR CAPTURER DES INSECTES

(30) Priority: 11.12.2004 GB 0427211
(43) Date of publication of application: 05.09.2007
(73) Proprietor: Texol Products Ltd, Dundee DD2 4SX (GB)
(72) Inventor: LEIGHTON, Frank, Dundee DD2 1JN (GB)
(74) Representative: Freeman, Avi
(86) International application number: PCT/GB2005/004766
(87) International publication number: WO 2006/061651

(56) References cited:
- WO-A-89/12389
- WO-A-99/37145
- US-A- 5 813 166
- US-A1- 2004 154 213

## Description

### Field of the Invention

The present invention relates to a device for use in the attraction and capture of insects. More specifically, the invention provides a device for attracting, capturing and killing haematophagous flying insects, said insect attraction and capture device having an improved arrangement for air inflow and outflow which results in improved performance of the device. The present invention further extends to a method of insect attraction and capture.

### Background to the Invention

There are various known means of attracting insects to insect capture devices. For example, bloodsucking (haematophagous) flying insects are commonly attracted to a potential living blood source, for example mammals, such as livestock or humans, through the detection of a mixture of carbon dioxide, air and water vapour which is present in exhaled breath produced as part of the respiration process. The body heat of the mammalian host can also act as an insect attractant.

Insects are attracted to presently known insect traps through the use of attractant means such as lights, attractants such as sugar-based solutions, or chemical-based attractants such as octenol. These attractant means are generally provided in, or are located in the close proximity of such traps. Once in the vicinity of the trap, various means are commonly used to contain or kill the insects. Such means general involve either capturing the insect within the trap or retaining the insect in a specific area in the vicinity of the trap. The insects can then be killed by a number of means, for example, drowning, or the use of insecticides.

Insect traps which are specifically designed for the trapping of mosquitoes, are also known in the field. In these traps, carbon dioxide gas and/or chemical attractants such as octenol are released into the air in the vicinity of the trap. This carbon dioxide and attractant mixture is detected by the mosquitoes, and serves to draw the insects along a concentration gradient towards the trap. Once in the vicinity of the trap, a suction mechanism, generally an inward flow of air, is used to draw the mosquitoes either into an insect capture area located within an internal portion of the trap, or into a separate capture area, where the insects can be retained until they die or are killed.

International PCT Patent Publication No WO 2004/082376 discloses an example of such a trap. International PCT Patent Publication No WO 99/37145 describes a further example of such a device. In this device, hydrocarbon gas fuel is combusted to produce a gaseous mixture of carbon dioxide and water vapour. The combusted gases are then released in a downward direction (i.e. vertically downwards) through an outflow exhaust pipe. Insects which are attracted towards the device due to their attraction to the gaseous mixture being exhausted therefrom, are drawn inside the device by an inward suction current of air which flows inwards through an inlet pipe. This inlet pipe is in a concentric arrangement within the downwardly extending exhaust pipe. This arrangement of the exhaust pipe and the inlet pipe results in air being drawn in from about the periphery of the exhausted outflow gas.

Carbon dioxide is produced following the combustion of hydrocarbon gas within a combustion chamber located within the device. An exhaust pipe conducts the carbon dioxide from the combustion chamber to an outlet port located at the periphery of the device from where the carbon dioxide is exhausted.

The outlet exhaust pipe is arranged concentrically within the inlet pipe. However, the inlet pipe draws in air which flows in a direction which opposes that of the outflow of carbon dioxide which is exhausted from the device.

In order to pass from the combustion chamber to the outlet port, and further in order to assume its position located concentrically within the inlet pipe, the outlet pipe must enter through a side wall of the inlet pipe and intersects through part of the inflow pipe. This arrangement therefore necessitates a cross-over point where the outflow exhaust pipe dissects through part of the inlet pipe, prior to the outflow conduit assuming the same directional orientation as the outer inlet pipe.

A suction source draws air into the inlet pipe and is provided at a first end of the pipe. The opposing end of the pipe forms the mouth of the inlet, and is located at an external point of the device. The suction provided by the suction source provides a constant flow of air into the inlet conduit when the unit is in operation. However, although suction is uniform at the end of the conduit proximal to the suction source, the inward suction is not uniform at the mouth of the inlet pipe.

The dissection of the outflow pipe across part of the inlet pipe results in a loss of suction at an area at the mouth of the inlet pipe which is located substantially directly downstream from the point at which the outflow pipe dissects the inflow pipe. This dissection of the outflow pipe across part of the diameter of the inflow pipe effectively causes an obstruction of part of the inflow pipe which results in a disruption to the inward flow of air within the inflow pipe at points upstream of the point of intersection of the outflow pipe.

The loss of suction flow that results in the area of the inlet pipe upstream from the point of dissection (or crossing) of the outflow pipe results in suction being considerably reduced in that area. This area of reduced suction translates to an area of no or substantially little suction at the mouth of the inflow pipe which is upstream from, and in register with, the point at which the outflow pipe dissects the inflow pipe.

The presence of this area of reduced suction results in a reduction in the uniformity of the air inflow which passed into the inlet pipe and this detracts from the efficiency of the unit when drawing air (and insects) into it.

Accordingly, the reduced inward flow of air (suction) which results about this area of the mouth of the inflow pipe translates into a reduction in the performance of the unit and accordingly its insect capturing capability is decreased. Most specifically, a unitary level of inward suction is not present about the full circumference of the inward (suction) pipe.

The carbon dioxide/attractant mix released from insect traps such as that described above in WO 99/37145 further suffers from the problem that it is rapidly dissipated into the surrounding atmosphere following its exhaustion from the device. This is particularly problematic when the device is located in an exposed location, or when the device is exposed to windy conditions. Such conditions increase the dissipation of the attractant into the atmosphere, this resulting in the concentration of attractant becoming too dilute to provide an effective concentration gradient for attraction of mosquitoes towards the trap. As such, the trap becomes ineffective for insect attraction.

Accordingly, the dissipation of the attractant gases results in the traps losing trapping efficiency and also being less energy efficient as more carbon dioxide needs to be provided to produce an emission level which is sufficient to be detected by insects.

US-A-5,813,166 discloses a trap system for preventing the entry of mosquitoes into a defined area. The system consists of a plurality of mosquito traps positioned at predetermined spacings around the perimeter of the defined area. The traps comprise suction means to draw insects into a capture area.

The apparatus according to an embodiment of the invention produces an outflow of exhausted gas which forms a dispersion pattern which results in improvements in insect attraction towards the device, as the exhaustion of the carbon dioxide and attractant mixture is dispersed in such a way that it is localised about the vicinity on the insect capture device for an increased duration. This dispersion pattern effectively provides a 'carpet' like covering of the attractant mixture about an area adjacent to the mouth of the outflow, this improvement in insect attraction translates into an associated improvement in capture where the modified inlet and outlet of the invention are used.

### Summary of Invention

According to the present invention, there is provided an insect trapping apparatus according to claim 1.

### Arrangement of Inlet and Outlet

According to an embodiment of the invention, the suction means is provided in the same orientation as the outlet, such that the current of air inflow drawn into the apparatus is in a direction which is substantially opposite to that of the exhausted from the unit. In such an arrangement, the inflow of air will also therefore move in a substantially horizontal plane, however the direction of flow of this air will be substantially opposite to the flow of air exhausted from the mouth of the outflow (outlet).

The at least one outlet port and the at least one inlet port may be independently manufactured and arranged in the apparatus.

In one embodiment the inlet port is provided substantially below the outlet port (i.e. between the outlet port and the surface upon which the apparatus is placed).

In an alternative embodiment, the outlet port is provided substantially below the inlet port (i.e. between the ground and the inlet port).

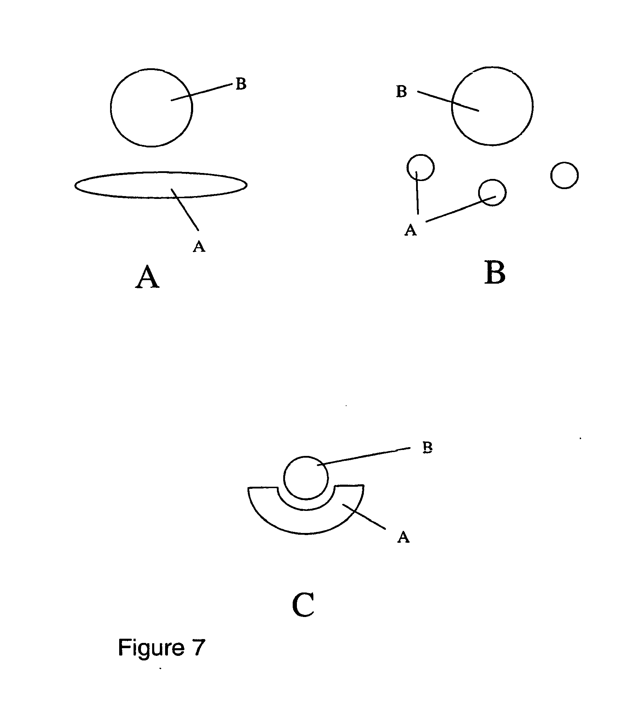

In further embodiments, the inlet and outlet ports may be of any suitable shape to facilitate the inflow and outflow of air into and out of the device, respectively. Suitable shapes are such as shown in Figure 7.

In a further embodiment the total area of the at least one inlet port is greater than the total surface area of the at least one outlet port.

A suitable example of one arrangement of the inlet and outlet ports comprises a substantially circular outlet port and a substantially rectangular inlet port. In such an arrangement, said inlet port is provided below, or inferior to said outlet port, as seen when said apparatus is placed on a substantially flat surface.

Alternatively, the inlet port may be of any elongate shape. An example of this embodiment is shown in Figure 7A.

In further embodiments, the at least one inlet port may curve, or be arranged about around part of the at least one outlet port. Thus the inlet port may not extend fully around the outlet port.

In one embodiment the inlet port would extend less than halfway around the outlet port. An example of such an embodiment is shown in Figure 7C. In a further arrangement a single inlet port substantially surrounds or is located in proximity to a single, substantially circular outlet port.

In a further embodiment, a plurality of inlet ports are arranged about a single outlet port. An example of this embodiment is shown in Figure 7B. In this embodiment the combined area of the openings of the plurality of inlet ports may be larger than the opening of the outlet port.

### Attractant

In one embodiment the attractant is a liquid, in particular a liquid which is provided in aerosol form.

In a further embodiment the attractant is a gas.

In one embodiment the attractant is carbon dioxide gas. The carbon dioxide source may be any suitable source of carbon dioxide. For example, the carbon dioxide source may be a pressurised canister of carbon dioxide. Alternatively, the carbon dioxide may be provided as a product of a chemical reaction, for example from the reaction of calcium carbonate and water. In one embodiment, the carbon dioxide can evaporate from a source of dry ice.

In an alternative embodiment the carbon dioxide is produced by the combustion of a mixture of gas and air, preferably in the presence of a catalyst.

In this embodiment, the carbon dioxide exhaust is usually warmer than ambient on exhaust and may thus rise until it cools and then falls to form a carpet (or horizontal covering) over the ground beneath or directly in front of the apparatus as described above.

The combusted gas may be a hydrocarbon gas such as propane, butane or a suitable mixture thereof. Alternatively, the gas is Patio Gas™, a propane/butane mixture supplied by Calor UK.

The hydrocarbon gas is typically stored within a container and discharged via a 37mb pressure regulator. Other regulators may be used to achieve alternative gas flow pressures. The gas container is located next to the apparatus. The hydrocarbon gas preferably enters a combustion chamber in the apparatus through a nozzle which controls gas flow and pressure.

In the embodiment where the carbon dioxide is provided by combustion, a second suction means, for the suction of air for mixing with the products of combustion, is provided by a venturi arrangement. For the purposes of the present invention, a venturi arrangement is defined as an opening which narrows, causing a build-up of pressure sufficient to draw air into the apparatus of the invention.

In a further embodiment the attractant is a gaseous mixture comprising carbon dioxide, air and moisture, the mixture being exhausted.

### Carbon Dioxide Exhaust

Typically the carbon dioxide concentration immediately following combustion is between 6000 to 12000 ppm at a temperature which is usually in the region of between 160°C to 210°C.

In one embodiment of the present invention, the combusted carbon dioxide mixture is exhausted from the apparatus at a concentration of between 500 to 10000 ppm, more preferably between 600 to 7000 ppm.
In a further embodiment, the carbon dioxide mixture is exhausted at a concentration of approximately 4600 ppm.

The temperature of the carbon dioxide mixture on exhaustion from the apparatus may be at a temperature of between 22 and 45°C, preferably between 24 and 42°C. Most preferably the temperature of the carbon dioxide mixture is maintained at between 10 to 15°C above ambient temperature (i.e. above the temperature of the surrounding atmosphere).

An output of approximately 4600 parts per million (ppm) carbon dioxide at a temperature 10-20°C above ambient temperature is suitable. An output of 2,4 to 3,2 km/h (1,5 to 2,0 mph) is typical, however the outflow can range from an air flow speed of 0,8 to 8,1 km/h (0,5 to 5,0 mph). This level of output produces a concentration of CO₂ of around 1500ppm at 200mm from the outlet port, the concentration increasing on approaching the outlet port.

An insect attractant may be added to the carbon dioxide prior to it being exhausted. Alternatively, a bait container provided proximal to the outlet port contains the attractant.

Suitably, the attractant is an insect sex attractant pheromone. For example, the attractant may be one or more of octenol, octonal, 1-heptanol, 3-octanol or the like.

The attractant may also contain a mixture of octenol and lactic acid or the like.

### Insect Trapping

The inward suction of air (suction means) may be provided by at least one fan. The at least one fan may suitably be a 92mm fan. A suction rate of around 6,4 to 7,2 km/h (4 to 4,5 mph) as measured at the mouth of the inlet port is preferred.

The fan is driven by thermoelectric generation. Preferably the thermoelectric generators (TEGs) are powered by the heat generated by the combustion of a hydrocarbon in the carbon dioxide production process in the combustion chamber. In one embodiment of the present invention, at least four thermoelectric generators connected in series are used.

Thermoelectric generators suitable for use with the invention will be known to the skilled man. Suitable thermoelectric generators can be obtained from suppliers such as Melcor, Ferrotec and Supercool AB. Such thermoelectric generators can be manufactured to the specification required for use with the apparatus. A single thermoelectric generator assembly can be used to power the apparatus at 12 volts and 0.5 amps.

The insects trapped by the apparatus are any haematophagous insects. According to one embodiment of the invention, the insects are from the family *Ceratopogonidae,* preferably midges. According to an alternative embodiment of the invention, the insects are mosquitoes.

### Catalyst

In one embodiment the combustion of the hydrocarbon occurs in the presence of a catalyst.

The catalyst used in the combustion is suitably one which allows the combustion of gas and air without a flame which, when operating at full working temperature, results in the release of carbon dioxide. In one embodiment the catalyst is typically in the form of a monolith block.

In one embodiment, the catalyst is a substrate coated with at least 200m²/g platinum. The greater the surface area of the catalyst, the better the performance at comparable precious metal content.

A wide range of catalysts are known in the art and a suitable catalyst will be known to the skilled man. The catalyst is typically housed in a chamber.

### Positioning of Apparatus

In one embodiment, the apparatus is placed on a surface, such that the exhaustion of the attractant from the device in a horizontal direction results in the outflow of the attractant being substantially parallel to the surface on which the apparatus is placed. In one specific embodiment, the surface on which the apparatus is placed is the ground.

Accordingly, the apparatus is typically adapted to be placed on a surface such as the ground and thus may further include a base adapted for such positioning.

The apparatus may suitably be arranged such that the carbon dioxide is exhausted in a substantially lateral direction with respect to the apparatus, for example in a substantially horizontal direction.

The gases exhausted from the apparatus will typically fall in a downward direction once they have been exhausted due to their relatively greater weight. The downward movement of the gas can form a covering or 'carpet' over the ground adjacent the point of outlet of the carbon dioxide from the apparatus.

In one embodiment the apparatus may be placed on a platform or may alternatively be supported on legs. Preferably such legs do not significantly raise the unit from ground level.

Suitably the apparatus is positioned on or near the ground such that the exhaust is released proximal to the ground.

The 'carpet' of insect attractant over the ground is highly efficient at attracting insects which are sensitive to air turbulence. For example, midges commonly fly close to the ground when they sense windy conditions or even slight air currents. When this air turbulence ceases, the midges fly higher in an upwards direction. Thus the exhaustion of the carbon dioxide in a substantially horizontal direction causes the insect attractant to be dispersed over the ground, this resulting in the attraction of insects when flying close to the ground during turbulent air conditions. Such an effect will also attract insects when they rise from the ground after the air turbulence has passed.

The attractant carpet is also less affected by air turbulence and windy conditions when exhausted proximal to the ground.

The present apparatus is thus highly efficient for use in windy conditions or conditions where there is any air turbulence.

### Additional Features

The apparatus may further include a safety mechanism which maintains a safe operating temperature.

The safety mechanism typically includes a safety valve, a safety valve button, a thermocouple and a bimetallic switch. The safety valve, safety valve button, thermocouple and bimetallic switch may be connected in a circuit.

The safety valve controls the flow of gas into the combustion chamber. The thermocouple may be located such that it detects when the temperature differential between the combustion chamber and the catalyst chamber is sufficiently high. A voltage is then caused to flow along the thermocouple to maintain the safety valve in its open position. If the temperature in the combustion chamber drops or the catalyst malfunctions, the valve closes, thus preventing gas entering the combustion chamber.

The bimetallic switch is typically located on the outer wall of the combustion chamber and is connected in circuit with the safety valve. The trapping apparatus is deemed to have overheated when the temperature of the outer wall of the combustion chamber exceeds 120°C.

In the embodiment wherein the carbon dioxide is provided as a combustion product, the apparatus may further include a multi-spark igniter. This is an electronic battery operated device. On depression it provides a continuous spark to the combustion chamber so as to ignite the gas/air fuel mixture.

The apparatus may also include a voltmeter or other voltage indicator to provide a visual reading of the power generated by the thermoelectric generator(s). For example, a red colour on a power indicator may show that the apparatus is warming up whilst a green colour could indicate that the apparatus is fully operational.

At least one vent may be provided in the walls of the combustion chamber so as to allow for free movement of the air drawn in by an inlet fan. This aids the suction of air and facilitates maintenance of a continuous air speed, for example approximately 11 km/h. Such an air speed helps prevent the inlet of insects into the combustion mechanism.

The apparatus may also include at least one handle for transportation. The at least one handle may be located on an external surface of the apparatus, or it may be integral with the casing of the apparatus.

The device may also be provided with further insect trapping means, to facilitate the capture and retention of insects drawn into the device. Suitable trapping means will be well known to the skilled reader. A typical example is paper coated with an adhesive substance.

The apparatus may also be used merely for attracting insects.

Further insect attracting means may also be provided on or around the apparatus. Such means will be well known by those skilled in the field of insect attraction. Suitable examples include lights or sugar solutions.

Means for improving the attractiveness of the apparatus to consumers may also be provided on the apparatus. For example, painted or printed images may be applied to the outer surface of the apparatus. Alternatively, lights such as LEDs may be provided on the device.

The inventor has further identified that, where the attractant is carbon dioxide, if this attractant is exhausted in a substantially horizontal direction, then the drawing in of air (the inflow), for the purposes of insect capture, from an area located substantially below the outlet used to exhaust the carbon dioxide results in an unexpectedly highly efficient arrangement for the attraction and capture of insects.

An alternative insect capture apparatus, which is not according to the invention, comprises:
a source of carbon dioxide;
an exhaust means comprising at least one outlet port, said exhaust means exhausting carbon dioxide in a substantially horizontal direction;
a suction means comprising at least one inlet port through which air is drawn into the apparatus, said suction means allowing insects contained in the air present in an area substantially below the at least one outlet port to be drawn in to the at least one inlet port; and
means for retaining the insects which are drawn into the apparatus within a specific location.

### Arrangement of Inlet and Outlet

In one embodiment the suction means is provided in the same orientation as the outlet, such that the current of air inflow drawn into the apparatus is in a direction which is substantially opposite to that of the exhausted from the unit. In such an arrangement, the inflow of air will also therefore move in a substantially horizontal plane, however the direction of flow of this air will be substantially opposite to the flow of air exhausted from the mouth of the outflow (outlet).

The at least one outlet port and the at least one inlet port may be independently manufactured and arranged in the apparatus.

In one embodiment the inlet port is provided substantially below the outlet port (i.e. between the outlet port and the surface upon which the apparatus is placed).

In an alternative embodiment, the outlet port is provided substantially below the inlet port (i.e. between the ground and the inlet port).

In further embodiments, the inlet and outlet ports may be of any suitable shape.

In a further embodiment the total area of the at least one inlet port is greater than the total surface area of the at least one outlet port.

A suitable example of one arrangement of the inlet and outlet ports comprises a substantially circular outlet port and a substantially rectangular inlet port. In such an arrangement, said inlet port is provided below, or inferior to said outlet port, as seen when said apparatus is placed on a substantially flat surface.

Alternatively, the inlet port may be of any elongate shape. An example of this embodiment is shown in Figure 7A.

In further embodiments, the at least one inlet port may curve, or be arranged about around part of the at least one outlet port. Thus the inlet port may not extend fully around the outlet port.

In one embodiment the inlet port would extend less than halfway around the outlet port. An example of such an embodiment is shown in Figure 7C. In a further arrangement a single inlet port substantially surrounds or is located in proximity to a single, substantially circular outlet port.

In a further embodiment, a plurality of inlet ports are arranged about a single outlet port. An example of this embodiment is shown in Figure 7B. In this embodiment the combined area of the openings of the plurality of inlet ports may be larger than the opening of the outlet port.

### Positioning Apparatus for Operation

The apparatus is typically adapted to be placed on a surface such as the ground and thus may further include a base adapted for such positioning.

Suitably the apparatus is positioned on or near the ground such that the exhaust is released proximal to the ground. As used herein, the term 'proximal to the ground' means that the carbon dioxide attractant is exhausted from the insect capture apparatus in a substantially horizontal direction, with said exhaustion occurring at a point not more that 2 meters above the surface on which the device is placed, more preferably not more than 1 meter above the surface upon which the apparatus is placed, even more preferably not more than 50cm above the surface upon which the apparatus is placed, even more preferably not more than 25cm above the surface upon which the apparatus is placed, and most preferably not more than 10cm above the surface upon which the apparatus is placed.

In one embodiment the surface on which the apparatus is placed is the ground. It is preferred that a flat or substantially flat area of ground is selected for the placement of the apparatus.

Where the apparatus is placed on a flat or substantially flat surface, in particular the ground, it preferred that the carbon dioxide is exhausted in a substantially lateral direction with regard to the orientation of the apparatus, such a lateral direction will result in the carbon dioxide being exhausted in a substantially horizontal direction.

In one embodiment, the interior end of the suction means may be disposed within the retaining means, such that insects which are drawn into the apparatus are passaged directly to said retaining means. In one embodiment, said retaining means are provided within the insect attraction and capture apparatus.

In a further embodiment, the retaining means is provided out with the insect capture apparatus

Typically the retaining means is a capture bag or the like or any other suitable means which allows air flow there through. Such an arrangement allows the inflow of air to pass through the bag, while preventing the passage of insects which may be contained in the drawn in air. The capture bag may be disposable, and is preferably substantially constructed from a mesh bag.

### Carbon Dioxide Source

The carbon dioxide source may be any suitable source of carbon dioxide. For example, the carbon dioxide source may be a pressurised canister of carbon dioxide. Alternatively, the carbon dioxide may be provided as a product of a chemical reaction, for example from the reaction of calcium carbonate and water. In one embodiment, the carbon dioxide can evaporate from a source of dry ice.

In an alternative embodiment the carbon dioxide is produced by the combustion of a mixture of gas and air, preferably in the presence of a catalyst.

In this embodiment, the carbon dioxide exhaust is usually warmer than ambient on exhaust and may thus rise until it cools and then falls to form a carpet (or horizontal covering) over the ground beneath or directly in front of,the apparatus as described above.

The combusted gas may be a hydrocarbon gas such as propane, butane or a suitable mixture thereof. Alternatively, the gas is Patio Gas™, a propane/butane mixture supplied by Calor UK.

The hydrocarbon gas is typically stored within a container and discharged via a 37mb pressure regulator. Other regulators may be used to achieve alternative gas flow pressures. The gas container is located next to the apparatus. The hydrocarbon gas preferably enters a combustion chamber in the apparatus through a nozzle which controls gas flow and pressure.

In the embodiment where the carbon dioxide is provided by combustion, a second suction means, for the suction of air for mixing with the products of combustion, is provided by a venturi arrangement. For the purposes of the present invention, a venturi arrangement is defined as an opening which narrows, causing a build-up of pressure sufficient to draw air into the apparatus of the invention.

### Carbon Dioxide Exhaust

Typically the carbon dioxide concentration immediately following combustion is between 6000 to 12000 ppm at a temperature which is usually in the region of between 160°C to 210°C.

In one embodiment, the combusted carbon dioxide mixture is exhausted from the apparatus at a concentration of between 500 to 10000 ppm, more preferably between 600 to 7000 ppm. In a further embodiment, the carbon dioxide mixture is exhausted at a concentration of approximately 4600 ppm.

The temperature of the carbon dioxide mixture on exhaustion from the apparatus may be at a temperature of between 22 and 45°C, preferably between 24 and 42°C. Most preferably the temperature of the carbon dioxide mixture is maintained at between 10 to 15°C above ambient temperature (i.e. above the temperature of the surrounding atmosphere).

An output of approximately 4600 parts per million (ppm) carbon dioxide at a temperature 10-20°C above ambient temperature is suitable. An output of 2,4 to 3,2 km/h (1,5 to 2,0 mph) is typical, however the outflow can range from an air flow speed of 0.5 mph to 5 mph. This level of output produces a concentration of CO₂ of around 1500ppm at 200mm from the outlet port, the concentration increasing on approaching the outlet port.

An insect attractant may be added to the carbon dioxide prior to it being exhausted. Alternatively, a bait container provided proximal to the outlet port contains the attractant.

Suitably, the attractant is an insect sex attractant pheromone. For example, the attractant may be one or more of octenol, octonal, 1-heptanol, 3-octanol or the like.

The attractant may also contain a mixture of octenol and lactic acid or the like.

### Insect Trapping

The suction means may be provided by one fan. The fan may suitably be a 92mm fan. A suction rate of around 6,4 to 7,2 km/h (4 to 4,5 mph) as measured at the mouth of the inlet port is preferred.

The fan is driven by thermoelectric generation. Preferably the Thermoelectric generators (TEGs) are powered by the heat generated by the combustion of a hydrocarbon in the carbon dioxide production process in the combustion chamber. In one embodiment, at least four thermoelectric generators connected in series are used.

Thermoelectric generators suitable for use with the invention will be known to the skilled man. Suitable thermoelectric generators can be obtained from suppliers such as Melcor, Ferrotec and Supercool AB. Such thermoelectric generators can be manufactured to the specification required for use with the apparatus. A single thermoelectric generator assembly can be used to power the apparatus at 12 volts and 0.5 amps.

The insects trapped by the apparatus are any haematophagous insects. According to one embodiment the insects are from the family *Ceratopogonidae,* preferably midges. According to an alternative embodiment, the insects are mosquitoes.

### Additional Features

The apparatus may further include a safety mechanism which maintains a safe operating temperature.

The safety mechanism typically includes a safety valve, a safety valve button, a thermocouple and a bimetallic switch. The safety valve, safety valve button, thermocouple and bimetallic switch may be connected in a circuit.

The safety valve controls the flow of gas into the combustion chamber. The thermocouple may be located such that it detects when the temperature differential between the combustion chamber and the catalyst chamber is sufficiently high. A voltage is then caused to flow along the thermocouple to maintain the safety valve in its open position. If the temperature in the combustion chamber drops or the catalyst malfunctions, the valve closes, thus preventing gas entering the combustion chamber.

The bimetallic switch is typically located on the outer wall of the combustion chamber and is connected in circuit with the safety valve. The trapping apparatus is deemed to have overheated when the temperature of the outer wall of the combustion chamber exceeds 120°C.

In the embodiment wherein the carbon dioxide is provided as a combustion product, the apparatus may further include a multi-spark igniter. This is an electronic battery operated device. On depression it provides a continuous spark to the combustion chamber so as to ignite the gas/air fuel mixture.

The apparatus may also include a voltmeter or other voltage indicator to provide a visual reading of the power generated by the thermoelectric generator(s). For example, a red colour on a power indicator may show that the apparatus is warming up whilst a green colour could indicate that the apparatus is fully operational.

At least one vent may be provided in the walls of the combustion chamber so as to allow for free movement of the air drawn in by an inlet fan. This aids the suction of air and facilitates maintenance of a continuous air speed, for example approximately 11 km/h. Such an air speed helps prevent the inlet of insects into the combustion mechanism.

The apparatus may also include at least one handle for transportation. The at least one handle may be located on an external surface of the apparatus, or it may be integral with the casing of the apparatus.

The device may also be provided with further insect trapping means, to facilitate the capture and retention of insects drawn into the device. Suitable trapping means will be well known to the skilled reader. A typical example is paper coated with an adhesive substance.

The apparatus may also be used merely for attracting insects.

Further insect attracting means may also be provided on or around the apparatus. Such means will be well known by those skilled in the field of insect attraction. Suitable examples include lights or sugar solutions.

Means for improving the attractiveness of the apparatus to consumers may also be provided on the apparatus. For example, painted or printed images may be applied to the outer surface of the apparatus. Alternatively, lights such as LEDs may be provided on the device.

The inventor has further recognised that improved insect capture can be provided by arranging the inflow and outflow conduits in such a way that the outflow and inflow do not have to be provided in a concentric arrangement. The surprising finding that the inflow does not have to be located within the outflow has allowed the inventor to provide an insect capture device which has a modified structure in that the conduit which directs the outflow does not need to dissect the conduit which directs the inflow of air into the capture apparatus.

An alternative insect capture apparatus, which is not according to the invention, comprises:
an insect attractant comprising carbon dioxide,
an exhaust means including at least one outlet pipe through which the attractant is exhausted in a desired direction,
a suction means including at least one inlet pipe through which an inflow of air is drawn into the apparatus, said inflow being adequate to allow air flow suitable for the drawing in of insects contained within air in the area surrounding the periphery of the outlet port, and
means for retaining the insects which are drawn into the apparatus,
wherein the inlet pipe is not dissected by the outlet pipe such that there is no disruption of air flow within the inlet port caused by the outlet pipe.

In one embodiment the carbon dioxide is exhausted in a substantially horizontal direction.

In one embodiment the carbon dioxide is exhausted in a substantially upward direction.

The arrangement of the inlet and outlet pipes such the there is no dissection of the inlet pipe by the outlet pipe essentially results in the rate of air inflow through the port of the inlet pipe being unitary across the area of the mouth of the inlet pipe. By 'unitary' it is meant that the level of air inflow into the inlet pipe does not vary from one circumferential area or position of the mouth of the inlet pipe to another. Further, there would be an absence of 'dead spots' - i.e. areas associated with areas of reduced or no inward suction or movement of air into the inlet pipe.

In one embodiment the suction means is provided about only part of the outlet port of the exhaust means.

In one embodiment the inlet pipe is of a semicircular shape and extends substantially around the outlet port of the exhaust means.

The advantage to insect capture conferred by the outlet conduit not dissecting the inflow conduit is not limited to arrangements where the inflow and outflow of gas is in a substantially horizontal direction.

The present invention further extends to a method of attracting and capturing insects according to claim 19.

In one embodiment the attractant is carbon dioxide.

In a further embodiment the attractant is a gaseous mixture comprising carbon dioxide, air and moisture, the mixture being exhausted.

In one embodiment the gaseous mixture is exhausted in a substantially horizontal direction.

In one embodiment the base surface is the ground.

In one embodiment the method is performed on or near to the surface of the ground.

The insects trapped by the method are any haematophagous insects. According to one embodiment of the invention, the insects are from the family *Ceratopogonidae,* preferably midges. According to an alternative embodiment of the invention, the insects are mosquitoes.

Unless otherwise defined, all technical and scientific terms used herein have the meaning commonly understood by a person who is skilled in the art in the field of the present invention.

Throughout the specification, unless the context demands otherwise, the terms "comprise" or "include", or variations such as "comprises" or "comprising", "includes" or "including" will be understood to imply the inclusion of a stated integer or group of integers, but not the exclusion of any other integer or group of integers.

### Brief description of the Figures

The present invention will now be described with reference to the following examples which are provided for the purpose of illustration and are not intended to be construed as being limiting on the present invention, and further, with reference to the figures, wherein;

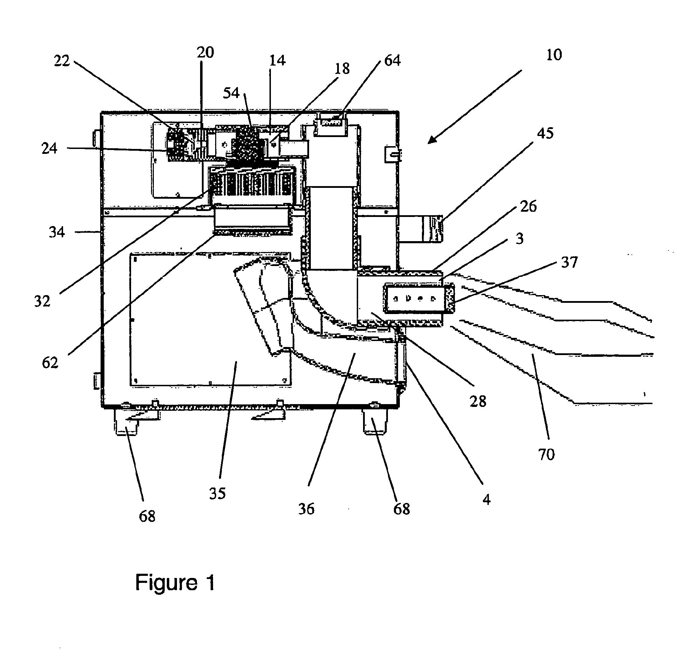

Figure 1 shows a cross-sectional side view through an apparatus according to the present invention;
Figure 2 shows a front perspective view of the exterior of one embodiment of an apparatus according to the present invention;
Figure 3 shows a front perspective view of the exterior of an alternative, but preferred, embodiment of an apparatus according to the present invention;
Figure 4 shows a perspective view of the base of the alternative embodiment of an apparatus according to the invention shown in Figure 3;
Figure 5 shows a cross sectional view of the combustion assembly of an apparatus according to the present invention;
Figure 6 shows a schematic of an apparatus according to the invention indicating the areas (1, 2 and 3) where the concentration and temperature of the carbon dioxide exhaust were measured; and
Figures 7(A) to (C) show schematic representations of alternative embodiments of the apparatus of the present invention showing different suitable arrangements of the outlet and inlet ports.

### Detailed Description of the invention

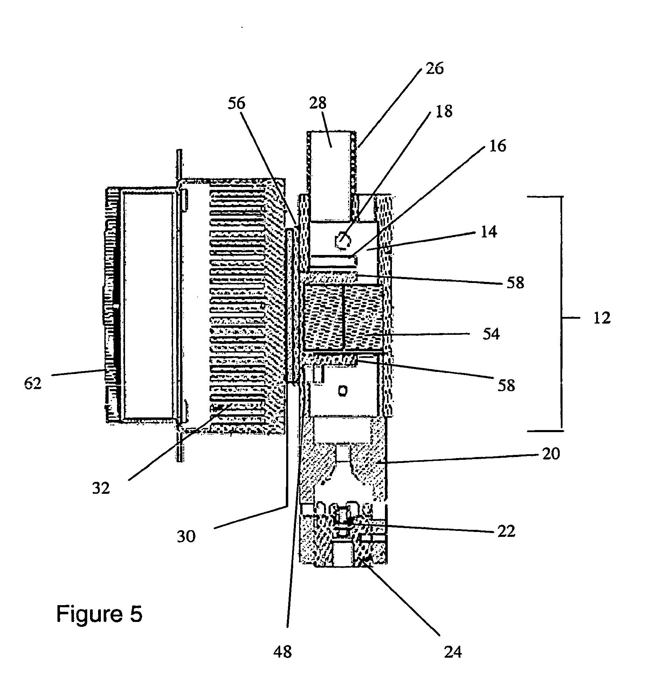

The trapping apparatus 10 has a combustion chamber 12 (Figure 5) housing a chamber 14 which contains a catalyst 54. A thermocouple 16 is located inside the combustion chamber 12 and is in contact with the catalyst chamber 14. A spark igniter 18 is also located inside the combustion chamber 12. The base of the combustion chamber 12 is mounted on a venturi arrangement housed within a nozzle housing 20. A jet carrier 24 is located at the base of the nozzle housing 20. A gas nozzle 22 is also provided at the base of the combustion chamber 12. A sintered disc (not shown) is located between the gas nozzle 22 and the combustion chamber 12.

An exhaust chimney 26 houses an inner exhaust pipe 28. Thermoelectric generators 30 are arranged between the outer wall of the combustion chamber 12 and a heat sink 32. A heat plate 56 is used in conjunction with heat transfer pins 58 to assist in thermal conductivity of the heat generated from combustion to the hot side 48 of the thermoelectric generators 30. The heat pins 58 are provided above and below the catalyst 54 to ensure effective heat transfer through to the heat plate 56 and thus to the thermoelectric generators 30. The high thermal conductivity of the cast aluminium combustion chamber 12 further assists in heat transfer to the thermoelectric generators 30.

The heat plate 56 is generally made of aluminium but may be made from copper. It is generally approximately 3mm thick.

The combustion chamber 12, thermoelectric generators 30 and heat sink 32 are housed in an outer housing 34. A capture chamber 35 is located inside the outer housing 34. The mouth of the inlet port 4 is provided on the outer housing 34 and leads into a conduit 36 which extends into the capture chamber 35. Inside the capture chamber 35, a capture bag (not shown) is attached to the interior end of the inlet conduit pipe 36.

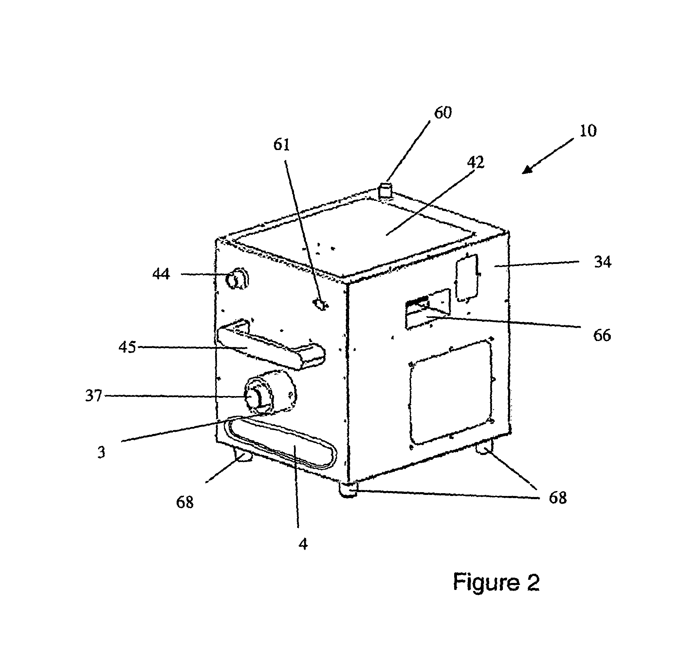

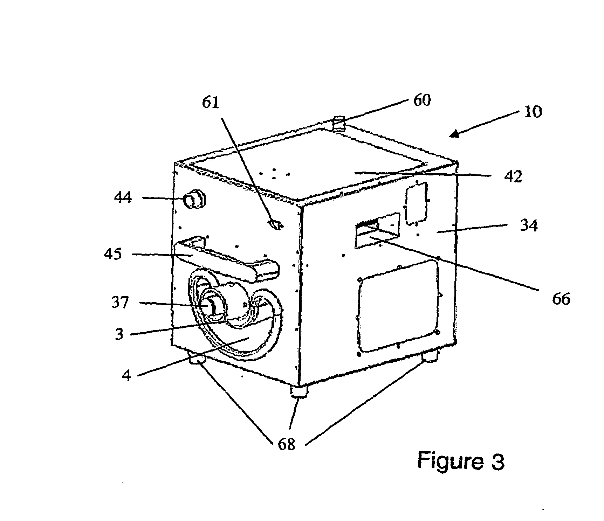

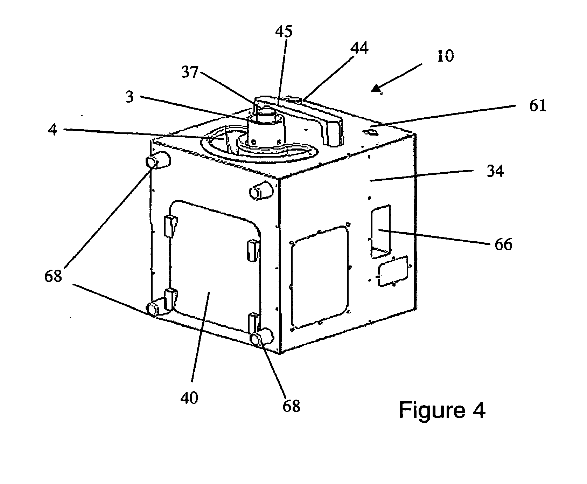

In the embodiment shown in Figure 2 the mouth of the inlet port 4 is oblong in shape and is provided below the outlet port 3. In Figures 3, 4 and 6, the inlet port 4 is a curved opening of a substantially semi-circular shape which extends part-way around the outlet port 3. The exhaust (outlet) port 3 leads into the exhaust pipe 28, this being a conduit which extends into the combustion chamber 12. An octenol container 37 is provided at the end of the outlet port 3.

A door 40 leading to the capture chamber 35 is provided on the outer housing 34. A service panel 42 is also provided on the outer housing 34. A multi-spark ignition switch 44 is situated on outer housing 34. An air vent 66 is also located on the outer housing 34.

An external handle 45 is located adjacent to the inlet and outlet ports 4,3. Feet 68 are provided on the base of the apparatus 10.

Figures 2 and 3 show the apparatus 10 in position for use. In use, the apparatus 10 is placed on the ground (or a suitable surface) and is supported by feet 68 such that outlet port is proximal to the ground. A gas cylinder (not shown) is situated alongside the apparatus. This is connected to the apparatus 10 via a gas regulator assembly (not shown). A safety valve button 60 is activated to draw gas from the gas cylinder through the nozzle 22 and sintered disc into the combustion chamber 12. The venturi arrangement simultaneously draws air into the combustion chamber 12. The ignition switch 44 is depressed, activating the spark igniter 18 and causing the gas and air mixture to ignite. A temperature differential thus builds up between the combustion chamber 12 and the heat sink 32. The gas mixture burns until the oxygen in the air is used up and the catalyst 54 reaches its working temperature of 350°C (measured on the top surface of the active catalyst: the temperature of the inside of the catalyst can reach up to 800°C). The gas is now burnt completely by catalytic conversion producing steam and 8000 - 10000 ppm carbon dioxide at 190°C (i.e. at the exhaust chimney 26). A power indicator 61 indicates that the apparatus 10 has reached this stage.

When the temperature differential between the combustion chamber 12 and the catalyst chamber 14 is sufficiently high, the thermocouple 16 produces a voltage which holds the safety valve open. The temperature differential is sufficient when a voltage of 5 millivolts is generated. The safety valve button 60 may then be deactivated.

The heat from the operational catalyst 54 is transferred via the heat pins 58 and plates 56 through the walls of the combustion chamber 12 to the thermoelectric generators 30, which are connected to an electrical output and which convert the temperature differential between the combustion chamber 12 and the heat sink 32 into a voltage which is used to drive the inlet and outlet fans 62, 64. The voltage required to activate the fans is approximately 3 volts. The inlet fan 62 helps maintain the temperature differential between the combustion chamber 12 and the heat sink 32. The outlet fan 64 mixes the carbon dioxide produced from combustion and the air drawn in by the venturi arrangement, and forces the mixture up the inner exhaust pipe 28 and out through the outlet port 3.

The carbon dioxide/water vapour/air mixture leaves the outlet port 3 at a concentration of 800 to 5000 ppm carbon dioxide and at a temperature in the region of 10 to 15°C above ambient temperature (ambient temperature being between 15 to 25°C, thus the carbon dioxide mixture is generally exhausted at approximately 20 to 22°C).

A cartridge 37 containing an insect attractant, such as octenol, is placed at the outlet port 3. When octenol evaporates from the cartridge 37, it mixes with the carbon dioxide/water vapour/air mixture, forming a warm insect-attracting vapour.

The carbon dioxide attractant mixture outlets the apparatus 10 horizontally via the outlet port 3. The carbon dioxide is heavier than the air surrounding the apparatus and thus the carbon dioxide attractant vapours sink to the ground to form a 'carpet' 70 of insect attractant covering the ground. Insects are attracted along the concentration gradient of the carpet 70 to the apparatus 10 and in particular to the mouth of the inlet port 4. The attracted insects are drawn in by the inlet fan 62 via the inlet port 4, down the pathway defined by the inlet conduit and into the capture bag. Once the capture bag is sufficiently full, the bag may be detached from the inlet pipe 36, sealed and disposed of. The capture bag is generally sufficiently full when it is half to three quarters full of insects.

Due to the proximity to the ground of the outlet port of the present invention, the attractant carpet is less likely to be disturbed by air currents and be dispersed. Prior art devices have insect attractants released vertically into the surrounding atmosphere such that they are easily dispersed. The concentration and temperature of the carbon dioxide mixture are thus reliably maintained at known and relatively constant levels, and insect trapping is optimised in using an apparatus of the present invention. Moreover, the apparatus of the present invention has improved efficiency in the capture of insects that react to wind currents by dropping to ground level.

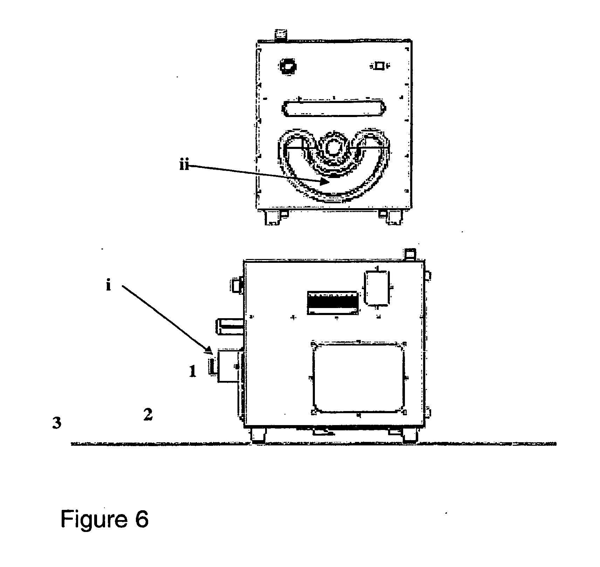

Table 1 shows the results of a test conducted to determine the efficiency of the apparatus in providing a carpet of attractant of defined characteristics in the local vicinity of the inlet port. Measurements of temperature and carbon dioxide concentration were measured at three different areas around the octenol container, as shown in Figure 6.

**Table 1 Results of analysis of carbon dioxide carpet around the apparatus**

| LOCATION OF MEASUREMENT | CARBON DIOXIDE CONCENTRATION (ppm) | TEMPERATURE (°C) |
|---|---|---|
| General vicinity of the apparatus ('ambient') | 600 | 22 |
| 1 | 4500 | 41.6 |
| 2 | 2200 | 27 |
| 3 | 1050 | 24.5 |

The output velocity from the outlet port was measured at point (i) in Figure 6 as 3,2 km/h (2,0 mph) , and the suction velocity of the inlet port was measured at point (ii) in Figure 6 as 4.0 mph.

As can be seen from Table 1, the apparatus was effective at retaining optimal carbon dioxide concentrations and temperatures in the local vicinity of the inlet port.

Various modifications and variations to the described embodiments of the inventions will be apparent to those skilled in the art without departing from the scope of the invention as defined in the appended claims. Although the invention has been described in connection with specific preferred embodiments, it should be understood that the invention as claimed should not be unduly limited to such specific embodiments. Indeed, various modifications of the described modes of carrying out the invention which are obvious to those skilled in the art are intended to be covered by the present invention. For example, the chemical attractant may be replaced by any chemical attractant commonly known in the field. The capture bags may optionally contain an insecticide.

## Claims

1. An insect trapping apparatus (10) comprising:
a source of attractant suitable for the attraction of insects;
an outlet comprising at least one outlet port (3) through which the attractant is exhausted;
a suction means which includes at least one inlet port (4) through which an inflow of air is drawn into the apparatus, and being adequate to draw in insects contained within the air, and
means (35) for retaining the insects which are drawn into the apparatus,
wherein the attractant is exhausted from the device in a substantially horizontal direction,
**characterised in that** the insects in use are drawn into the apparatus from an area proximal to the at least one outlet port and **in that** the inlet port (4) is provided in the same orientation as the outlet port (3).

2. An insect trapping apparatus as claimed in claim 1, wherein the inlet port (4) is provided below the outlet port (3).

3. An insect trapping apparatus as claimed in claim 1, wherein the outlet port (3) is provided below the inlet port (4).

4. An insect trapping apparatus as claimed in any preceding claim wherein the inlet is located about the outlet port.

5. An insect trapping apparatus as claimed in any preceding claim wherein the total area of the at least one inlet port is greater than the total area of the at least one outlet port.

6. An insect trapping apparatus as claimed in any preceding claim wherein a plurality of inlet ports are arranged about a single outlet port.

7. An insect trapping apparatus as claimed in any preceding claim wherein the attractant is a liquid.

8. An insect trapping apparatus as claimed in claim 7 wherein the attractant is in aerosol form.

9. An insect trapping apparatus as claimed in any one of claims 1 to 6 wherein the attractant is a gas.

10. An insect trapping apparatus as claimed in claim 9 wherein the attractant is carbon dioxide.

11. An Insect trapping apparatus as claimed in claim 10 wherein the carbon dioxide is produced by the combustion of a mixture of gas and air, in the presence of a catalyst.

12. An insect trapping apparatus as claimed in claim 10 or claim 11 wherein the carbon dioxide concentration immediately following combustion is between 6000 to 12000 ppm at a temperature which is usually in the region of between 160°C to 210°C.

13. An insect trapping apparatus as claimed in claim 10 or claim 11 wherein the carbon dioxide concentration exhausted from the apparatus is at a concentration of between 500 to 10000 ppm.

14. An insect trapping apparatus as claimed in claim 10 or claim 11 wherein the carbon dioxide concentration exhausted from the apparatus is at a concentration of between 600 to 7000 ppm.

15. An insect trapping apparatus as claimed in any one of claims 10 to 11 wherein the temperature of the carbon.dioxide upon exhaustion from the apparatus is between 22 and 45°C.

16. An insect trapping apparatus as claimed in any one of claims 10 to 14, wherein the temperature of the carbon dioxide upon exhaustion from the apparatus is between 10 to 15°C above ambient temperature.

17. An insect trapping apparatus as claimed in any one of claims 10 to 16, wherein an insect attractant is added to the carbon dioxide prior to it being exhausted.

18. An insect trapping apparatus as claimed in any preceding claim, wherein the inflow of air drawn into the suction means has an air flow rate of between 6,4 to 7,2 km/h (4 to 4,5 mph) as measured at the mouth of the inlet.

19. A method for the attraction and capture of insects, the method comprising:
exhausting an insect attractant through an outlet port (3);
wherein the insect attractant is exhausted in a direction substantially parallel to the ground and by allowing the attractant exhausted to form an attractant covering over the ground; and
drawing attracted insects through an inlet port (4) into an insect retaining means, the inlet port being proximal to the outlet port (3) and provided in the same orientation as the outlet port (3) and wherein the insects are drawn into the inlet port from an area substantially below the area from which the attractant is exhausted from the outlet port, and wherein the attracted insects are drawn into the inlet port (4) in a direction which is substantially opposite to the direction in which the attractant is exhausted.

20. A method as claimed in claim 19, wherein the attractant is carbon dioxide.

21. A method as claimed in claim 19, wherein the attractant is a gaseous mixture comprising carbon dioxide, air and moisture.

22. A method as claimed in any one of claims 19 to 21, wherein the attractant is exhausted in a horizontal direction.

## Patentansprüche

1. Insektenfangvorrichtung (10), umfassend:
eine zur Anlockung von Insekten geeignete Anlockmittelquelle;
einen Auslass, umfassend zumindest eine Auslassöffnung (3), durch die das Anlockmittel abgesaugt wird;
ein Ansaugmittel, das zumindest eine Einlassöffnung (4) einschließt, durch die einströmende Luft in die Vorrichtung hineingezogen wird, und die hinreichend ist, um in der Luft befindliche Insekten hineinzuziehen, und Mittel (35) zum Zurückhalten der Insekten, die in die Vorrichtung hineingezogen werden,
wobei das Anlockmittel in einer im Wesentlichen horizontalen Richtung aus der Vorrichtung abgesaugt wird,
**dadurch gekennzeichnet, dass** die Insekten im Einsatzfall von einer der zumindest einen Auslassöffnung benachbarten Fläche in die Vorrichtung hineingezogen werden und dass die Einlassöffnung (4) in der gleichen Richtung wie die Auslassöffnung (3) vorgesehen ist.

2. Insektenfangvorrichtung nach Anspruch 1, wobei die Einlassöffnung (4) unterhalb der Auslassöffnung (3) vorgesehen ist.

3. Insektenfangvorrichtung nach Anspruch 1, wobei die Auslassöffnung (3) unterhalb der Einlassöffnung (4) vorgesehen ist.

4. Insektenfangvorrichtung nach einem der vorherigen Ansprüche, wobei der Einlass um die Auslassöffnung herum vorgesehen ist.

5. Insektenfangvorrichtung nach einem der vorherigen Ansprüche, wobei die Gesamtfläche der zumindest einen Einlassöffnung größer ist als die Gesamtfläche der zumindest einen Auslassöffnung.

6. Insektenfangvorrichtung nach einem der vorherigen Ansprüche, wobei eine Vielzahl von Einlassöffnungen um eine einzelne Auslassöffnung herum angeordnet ist.

7. Insektenfangvorrichtung nach einem der vorherigen Ansprüche, wobei das Anlockmittel eine Flüssigkeit ist.

8. Insektenfangvorrichtung nach Anspruch 7, wobei das Anlockmittel in Aerosolform vorliegt.

9. Insektenfangvorrichtung nach einem der Ansprüche 1 bis 6, wobei das Anlockmittel ein Gas ist.

10. Insektenfangvorrichtung nach Anspruch 9, wobei das Anlockmittel Kohlendioxid ist.

11. Insektenfangvorrichtung nach Anspruch 10, wobei das Kohlendioxid durch die Verbrennung eines Gas-/Luftgemischs unter Vorhandensein eines Katalysators erzeugt wird.

12. Insektenfangvorrichtung nach Anspruch 10 oder Anspruch 11, wobei die Kohlendioxidkonzentration unmittelbar nach der Verbrennung zwischen 6000 bis 12000 ppm bei einer Temperatur beträgt, die gewöhnlich im Bereich zwischen 160°C bis 210°C liegt.

13. Insektenfangvorrichtung nach Anspruch 10 oder Anspruch 11, wobei die Konzentration der aus der Vorrichtung abgesaugten Kohlendioxidkonzentration zwischen 500 bis 10000 ppm liegt.

14. Insektenfangvorrichtung nach Anspruch 10 oder Anspruch 11, wobei die Konzentration der aus der Vorrichtung abgesaugten Kohlendioxidkonzentration zwischen 600 bis 7000 ppm liegt.

15. Insektenfangvorrichtung nach einem der Ansprüche 10 bis 11, wobei die Temperatur des Kohlendioxids beim Absaugen aus der Vorrichtung zwischen 22 und 45°C beträgt.

16. Insektenfangvorrichtung nach einem der Ansprüche 10 bis 14, wobei die Temperatur des Kohlendioxids beim Absaugen aus der Vorrichtung zwischen 10 bis 15°C beträgt.

17. Insektenfangvorrichtung nach einem der Ansprüche 10 bis 16, wobei dem Kohlendioxid vor dem Absaugen ein Insekten-Anlockmittel beigegeben wird.

18. Insektenfangvorrichtung nach einem der vorherigen Ansprüche, wobei das Einströmen von in das Einsaugmittel eingezogener Luft mit einer Luftströmungsrate von zwischen 6,4 bis 7,2 km/h (4 bis 4,5 mph) erfolgt.

19. Verfahren zum Anlocken und Einfangen von Insekten, wobei das Verfahren umfasst:
Absaugen eines Insekten-Anlockmittels durch eine Auslassöffnung (3);
wobei das Insekten-Anlockmittel im Wesentlichen in einer Richtung parallel zum Boden abgesaugt wird und das abgesaugte Anlockmittel ein bodendeckendes Anlockmittel bilden kann; und
Hereinziehen der angelockten Insekten durch eine Einlassöffnung (4) in ein Insekten-Rückhaltemittel, wobei sich die Einlassöffnung nahe der Auslassöffnung (3) befindet und in der gleichen Richtung wie die Auslassöffnung (3) vorgesehen ist und wobei die Insekten von einer Fläche in Wesentlichen unterhalb der Fläche, von der aus das Anlockmittel aus der Auslassöffnung abgesaugt wird, hereingezogen werden, und wobei die angelockten Insekten in die Einlassöffnung (4) in einer Richtung hereingezogen werden, die im Wesentlichen entgegengesetzt der Richtung liegt, in der das Anlockmittel abgesaugt wird.

20. Verfahren nach Anspruch 19, wobei das Anlockmittel Kohlendioxid ist.

21. Verfahren nach Anspruch 19, wobei das Anlockmittel ein gasförmiges Gemisch aus Kohlendioxid, Luft und Feuchtigkeit ist.

22. Verfahren nach einem der Ansprüche 19 bis 21, wobei das Anlockmittel in horizontaler Richtung abgesaugt wird.

## Revendications

1. Appareil pour capturer des insectes (10) comprenant :
une source d'attractif, approprié pour l'attraction d'insectes ;
une sortie comprenant au moins un orifice de sortie (3) à travers lequel l'attractif est sorti ;
un moyen d'aspiration qui comprend au moins un orifice d'entrée (4) à travers lequel un écoulement d'entrée d'air est aspiré dans l'appareil, et adéquat pour aspirer des insectes contenus dans l'air, et
un moyen (35) pour retenir les insectes qui sont aspirés dans l'appareil,
dans lequel l'attractif est sorti du dispositif dans une direction sensiblement horizontale,
**caractérisé en ce que** les insectes, durant l'utilisation, sont aspirés dans l'appareil à partir d'une zone proximale à l'un au moins des orifices de sortie et **en ce que** l'orifice d'entrée (4) est prévu dans la même orientation que l'orifice de sortie (3).

2. Appareil pour capturer des insectes selon la revendication 1, dans lequel l'orifice d'entrée (4) est prévu en dessous de l'orifice de sortie (3).

3. Appareil pour capturer des insectes selon la revendication 1, dans lequel l'orifice de sortie (3) est prévu en dessous de l'orifice d'entrée (4).

4. Appareil pour capturer des insectes selon une quelconque revendication précédente, dans lequel l'entrée est située autour de l'orifice de sortie.

5. Appareil pour capturer des insectes selon une quelconque revendication précédente, dans lequel la surface totale de l'un au moins des orifices d'entrée est supérieure à la surface totale de l'un au moins des orifices de sortie.

6. Appareil pour capturer des insectes selon une quelconque revendication précédente, dans lequel une pluralité d'orifices d'entrée sont agencés autour d'un seul orifice de sortie.

7. Appareil pour capturer des insectes selon une quelconque revendication précédente, dans lequel l'attractif est un liquide.

8. Appareil pour capturer des insectes selon la revendication 7, dans lequel l'attractif est sous forme d'aérosol.

9. Appareil pour capturer des insectes selon l'une quelconque des revendications 1 à 6, dans lequel l'attractif est un gaz.

10. Appareil pour capturer des insectes selon la revendication 9, dans lequel l'attractif est du dioxyde de carbone.

11. Appareil pour capturer des insectes selon la revendication 10, dans lequel le dioxyde de carbone est produit par la combustion d'un mélange de gaz et d'air, en présence d'un catalyseur.

12. Appareil pour capturer des insectes selon la revendication 10 ou la revendication 11, dans lequel la concentration en dioxyde de carbone immédiatement après la combustion est entre 6000 et 12000 ppm à une température qui est usuellement comprise entre 160 °C et 210 °C.

13. Appareil pour capturer des insectes selon la revendication 10 ou la revendication 11, dans lequel la concentration en dioxyde de carbone en sortie de l'appareil est à une concentration comprise entre 500 et 10000 ppm.

14. Appareil pour capturer des insectes selon la revendication 10 ou la revendication 11, dans lequel la concentration en dioxyde de carbone en sortie de l'appareil est à une concentration comprise entre 600 et 7000 ppm.

15. Appareil pour capturer des insectes selon l'une quelconque des revendications 10 à 11, dans lequel la température du dioxyde de carbone lors de la sortie de l'appareil est comprise entre 22 et 45 °C.

16. Appareil pour capturer des insectes selon l'une quelconque des revendications 10 à 14, dans lequel la température du dioxyde de carbone lors de la sortie de l'appareil est entre 10 et 15 °C plus élevée que la température ambiante.

17. Appareil pour capturer des insectes selon l'une quelconque des revendications 10 à 16, dans lequel un attractif à insectes est ajouté au dioxyde de carbone avant qu'il soit sorti.

18. Appareil pour capturer des insectes selon une quelconque revendication précédente, dans lequel l'écoulement d'entrée d'air aspiré dans le moyen d'aspiration présente un débit d'air d'entre 6,4 et 7,2 km/h (4 et 4,5 mi/h), tel que mesuré à l'entrée.

19. Procédé pour l'attraction et la capture d'insectes, le procédé comprenant les étapes consistant à :
faire sortir un attractif à insectes à travers un orifice de sortie (3) ;
dans lequel l'attractif à insectes sort dans une direction sensiblement parallèle au sol et en permettant à l'attractif sorti de former une couverture d'attractif par-dessus le sol ; et
aspirer des insectes à travers un orifice d'entrée (4) dans un moyen de retenue d'insectes, l'orifice d'entrée étant proximal à l'orifice de sortie (3) et prévu dans la même orientation que l'orifice de sortie (3) et dans lequel les insectes sont aspirés dans l'orifice d'entrée à partir d'une zone sensiblement en dessous de la zone à partir de laquelle l'attractif est sorti de l'orifice de sortie, et dans lequel les insectes attirés sont aspirés dans l'orifice d'entrée (4) dans une direction qui est sensiblement opposée à la direction dans laquelle l'attractif est sorti.

20. Procédé selon la revendication 19, dans lequel l'attractif est du dioxyde de carbone.

21. Procédé selon la revendication 19, dans lequel l'attractif est un mélange gazeux comprenant du dioxyde de carbone, de l'air et de l'humidité.

22. Procédé selon l'une quelconque des revendications 19 à 21, dans lequel l'attractif sort dans une direction horizontale.
